# EUROPÄISCHE PATENTSCHRIFT

(11) **EP 1 531 637 B1**
(45) Veröffentlichungstag und Bekanntmachung des Hinweises auf die Patenterteilung: **06.03.2013**
(21) Anmeldenummer: 04024476.6
(22) Anmeldetag: 14.10.2004
(51) Int. Cl.: H04W 4/02

(54) **Verfahren und System zum Abruf eines Services**
Method and system for actuating a service
Procédé et système pour retirer un service

(30) Priorität: 13.11.2003 DE 10353794
(43) Veröffentlichungstag der Anmeldung: 18.05.2005
(73) Patentinhaber: Deutsche Telekom AG, 53113 Bonn (DE)
(72) Erfinder: Kraus, Josef, 64807 Dieburg (DE)
(74) Vertreter: Braun-Dullaeus, Karl-Ulrich

(56) Entgegenhaltungen:
- EP-A1- 1 376 457
- WO-A1-01/01711
- US-A1- 2003 100 315

## Beschreibung

Die vorliegende Erfindung betrifft ein Verfahren zum Abruf eines Service, insbesondere in Form einer Information und/oder einer Dienstleistung, der einem Nutzerkreis an einem definierten Ort ("Service Point") öffentlich angeboten wird, wobei der Service von einem interessierten Nutzer abgerufen wird. Die Erfindung betrifft gleichfalls ein System zur Umsetzung des Verfahrens.

Solche Verfahren zum Abruf einer lokal angebotenen Dienstleistung werden unter dem Begriff "Location Based Services" subsummiert. Sie werden in besonderen Anwendungen schon elektronisch realisiert, wobei im Zusammenhang mit einem solchen Service Informationen oder Dienste bereitgestellt oder geliefert werden, die einem Ort oder der Umgebung eines Ortes, wie etwa dem Aufenthaltsort einer Person, zugeordnet werden können. So werden beispielsweise kundenorientierte Dienste angeboten, die vermittels mobiler Endgeräte angerufen werden und dann dem Kunden Informationen über nahegelegene Orte, wie Restaurants, Arztpraxen oder Geldautomaten liefern.

Die bekannten Verfahren funktionieren derart, dass vom System zunächst der Ort bestimmt wird, an dem sich die Person oder ein von der Person mitgeführtes mobiles Endgerät befindet. Die Ortsbestimmung geschieht mittels einer Einpeilung über die Basisstationen des Mobilfunks oder über ein Satelliten gestütztes Ortungssystem (GPS). Nach der Ortung wird dem Nutzer die Möglichkeit zur Auswahl des Service gegeben, wobei er über ein Menü auswählen kann. Den Informationsservice erhält er dann über die Verbindung zu seinem Endgerät. Dabei ist es auch bekannt, einen solchen Service über WLAN (oder Bluetooth) Verbindungen von einem Service Point auf das Endgerät zu übertragen.

Nachteilig an den bekannten Systemen ist, dass sie verhältnismäßig aufwendig sind und daher bislang nur auf geringes Interesse bei potentiellen Anbietern stoßen. Außerdem bedarf es gerade im Falle der Ortung komplexer technischer Strukturen, deren Nutzung mit vergleichsweise hohem Zeit- und Kostenaufwand einhergehen. Auch die Auswahl der gewünschten Information über Menues ist zeitaufwendig und teuer. In vielen Fällen möchte der Nutzer eine bestimmte Information direkt erhalten oder das späterer Erstellen der Information nur auslösen. All das trägt jedoch beim Nutzer nicht zur Erhöhung Attraktivität bei. Die bislang bekannten Verfahren sind somit für den täglichen Einsatz oft zu wenig anwenderfreundlich.

Die US 2003/0100315 A1 betrifft ein Verfahren zum Liefern von Serviceinformationen an einen Nutzer einer portablen Kommunikationseinrichtung. Der Nutzer trägt die Kommunikationseinrichtung und eine Auslöseeinheit mit einem RFID-Chip mit sich. Die Auslöseeinheit ist bei einem Serviceprovider im Zusammenhang mit einer Kommunikationsadresse des portablen Kommunikationsgerätes registriert. In Abhängigkeit der Position und gespeicherten Profilen des Nutzers können nun Serviceinformationen an den Nutzer übersandt werden.

Aufgabe der vorliegenden Erfindung ist es daher, ein Verfahren zum Abruf eines solchen Service zu schaffen, das sich kostengünstig und mit einfachen Mitteln realisieren lässt und das sich durch eine unkomplizierte Bedienung und eine schnelle Reaktion auszeichnet und so zur Erhöhung der Anwenderfreundlichkeit beiträgt. Außerdem ist es Aufgabe der Erfindung ein System zur Umsetzung des Verfahrens zu schaffen.

Diese Aufgaben werden mit einem Verfahren nach Anspruch 1 und einem System nach Anspruch 9 gelöst.

Der wesentliche Kerngedanke der Erfindung ist im Einsatz des Transponders zu sehen, mit dem sich der Nutzer als solcher identifiziert und damit beim System anmeldet. Derartige Transponder sind aus vielfältigen Anwendungen des täglichen Lebens bekannt. Beispielsweise werden sie häufig als Schlüssel eingesetzt. Dabei identifiziert sich der Nutzer über den Austausch elektromagnetischer Signale, die vom Transponder individuell modifiziert sind und die von einem am Service Point befindlichen Decoder erkannt werden. Nach der Anmeldung und der Identifikation initiiert der Service Point erfindungsgemäss die Durchführung des angebotenen Service.

Generell ist die Transponder Technik insbesondere die RFID-Technologie (Radio Frequency Identification) inzwischen allgemein bekannt und wird, wie schon dargelegt, vielfältig für berührungslose Identifikationsaufgaben eingesetzt. Die für diese Technik entscheidenden Komponenten sind ein sogenanntes "Tag", das den eigentlichen Transponder beinhaltet, und ein Lesegerät ("Reader") mit Decoder, wobei Tag und Reader vermittels elektromagnetischer Felder kommunizieren. Es sind Systeme für verschiedene Frequenzbereiche, einschliesslich LF (z. B. 125 kHz), HF (z.B. 13,56 MHz), UHF (z.B. 862 MHz), Microwave (z.B. 2.4 GHz) und 5 GHz Bereich bekannt. Ein solches Tag weist einen integrierten Schaltkreis mit einem Speicherteil (ROM, WORM, EEPROM), einem Substrat oder einer Platine und eine Antenne beispielsweise in Form einer Spule auf. Es dient als Informationsspeicher und kann eine nicht veränderbare Identitätsinformation enthalten.

Es sind "aktive" Tags bekannt, die ihre zum Senden erforderliche Energie von einer Batterie bekommen, während "passive" Tags ihre Energie aus einem vom Reader eingestrahlten Feld beziehen. Im Verhältnis zu den bislang eingesetzten Bluetooth oder WLAN Verbindungen liegt der Vorteil der Tags vor allem darin, dass in kürzester Zeit ein Datenaustausch zwischen Tag und Reader durchgeführt werden kann. Der Datenaustausch ist damit um ein Vielfaches schneller und unkomplizierter zu realisieren. Außerdem können "low-cost" Tags eingesetzt werden, die lediglich eine Identitätsinformation von 64 bis 128 bit auf einem Chip der kleiner als ein Quadratmillimeter ist tragen. Der Preis für ein solches Tag wird in den nächsten Jahren bei entsprechenden Stückzahlen auf unter 10 Cent pro Stück sinken.

Die Reader dienen zum Auslesen der auf dem Tag befindlichen Information und mitunter zum Beschreiben des Tags. Je nach beabsichtigter Reichweite verfügen die Reader über entsprechend große Antennen oder Spulen. Sie weisen einen Prozessor oder Controller auf und haben ein Interface für den Zugang zu einem Datennetz oder einen Anschluss für einen Host-Rechner. Mittlerweile sind auch Reader im PC-Card-Format als low-cost-Versionen erhältlich.

Die Erfindung, nämlich der Einsatz eines Transponders im Zusammenhang mit den genannten Diensten, ermöglicht die preisgünstige Realisierung eines Location Based Service unter Verwendung existierender Technologien. Dabei wird das einfache und unkomplizierte Auslesen von Informationen im Vorübergehen, das sogenannte "Pick Up", technisch nachbildet, wobei die Aktionen des Benutzers auf ein Minimum beschränkt sind. Je nach Komplexität der erfindungsgemäßen Lösung wird der Transponder lediglich als Auslöser einer Aktion oder als Überträger nutzerspezifischer Information eingesetzt.

In einer besonders einfachen Ausführungsform bringt der Nutzer den Transponder in unmittelbare Nähe zu einem am Service Point befindlichen Decoder und löst damit die Durchführung des angebotenen Dienstes aus. Das Auslösen geschieht durch die Kommunikation zwischen Transponder und Reader, d.h. der Reader erkennt zunächst nur den geeigneten Transponder. Eine weitere Verarbeitung der individuellen auf dem Transponder enthaltenen Daten findet gegebenenfalls erst in weiteren Schritten statt. Der Service Point befindet sich an einem Ort, an dem ein Nutzer seinen Bedarf an einer aktuellen Information, an Material, beispielsweise einer Ware, an einer Dienstleistung, beispielsweise einem Service, oder an einer Legitimation, beispielsweise einer Eintrittsberechtigung, erkennt.

Da es sich dabei meistens um einen Informationsservice handelt, muss der Nutzer auch die Möglichkeit haben, den Service wahrnehmen zu können. Die Information könnte beispielsweise auf einem am Service Point befindlichen Display oder Plakat dargeboten werden. Um eine solche nicht an die Identität des Nutzers gebundene Darbietung durchzuführen, bedarf es nicht der Verarbeitung eventuell auf dem Transponder befindlicher individueller Nutzerdaten. Eine solche ist jedoch nötig, wenn Informationsmaterial dem Nutzer nach Hause oder in seine Mailbox gesandt werden soll. Besonders vorteilhaft ist es jedoch, wenn der Nutzer ein zur mobilen Kommunikation geeignetes Endgerät, insbesondere ein Mobiltelephon oder ein PDA mit Mobilfunkausstattung, mitführt, mit dem er einerseits Daten zum angebotenen Dienst übertragen kann und/oder auf dem er andererseits vom Dienst empfangene Daten ausgeben kann. Jedem Service Point ist ein näher bestimmter Dienst, wie das Versenden einer dem Service Point zugeordneten Information oder beispielsweise auch das entsenden eines Taxis zum Service Point zugeordnet.

Ein mobiles Endgerät ermöglicht nunmehr unterschiedliche Interaktionen zwischen dem Nutzer und dem angebotenen Dienst. Z.B. kann die Auswahl der dem Service Point zugeordneten Information weiter verfeinert werden. Das Endgerät, das die Information erhalten soll, wird über das RFID-Tag identifiziert. So kann beispielsweise die Rufnummer (CLI) des Endgerätes im Tag codiert sein. Um Versehen und Missbrauch zu verhindern, ist es vorgesehen, dass der Benutzer die Service Anfrage durch eine vordefinierte Nachricht (z. B. durch eine SMS) bestätigt, die er an den Dienst sendet. Diese benötig im Prinzip keine weiteren Eingaben und kann durch einen einfachen Knopfdruck innerhalb des Bedienungsmenüs abgesandt werden.

Unter dem Einsatz der RFID-Technik und der Endgeräte bildet der Pick up-Service das Auflesen oder die Mitnahme von aktueller Information, ähnlich der Mitnahme eines Fahrplans oder eines Flugblattes, nach. Der Service kann mit speziellen Komponenten, im folgenden unter dem Begriff "Pick-Up-Point" zusammengefasst, und verschiedenen Software- und Serverkomponenten im Endgerät und in einem Kommunikationsnetz realisiert werden.

Ausführungsbeispiele der Erfindung werden nachfolgend näher erklärt:

Als beispielhafte Anwendung lassen sich folgende Szenarien vorstellen: Herr X aus Darmstadt ist auf einer mehrtägigen Geschäftsreise in München. Dort besteigt er die S-Bahn, um in Feldkirchen die Firma Y zu besuchen. An der Haltestelle Feldkirchen steigt er aus und möchte sich gleich über die Rückfahrmöglichkeiten informieren. Dazu hält er sein Mobiltelefon mit integriertem RFID-Tag an den Pick-Up-Point neben dem dort ausgehängten Fahrplan. Das Aufblinken eines am Pick-Up-Point vorhandenen Signallämpchens zeigt ihm an, dass sein RFID-Tag erkannt wurde. Er wählt im Pick-Menü seines Mobiltelefons "Pick-MMS" und bestätigt mit "OK". Kurz darauf bekommt er den Fahrplan der Haltestelle per MMS zugesandt.

In einem anderen Beispiel geht Herr Z nach dem Einchecken im Hotel abends spazieren. Er kommt an einem Reisebüro vorbei, das im Schaufenster unter anderem eine Reihe von Tagesauflügen anbietet. Da er das nächste verlängerte Wochenende privat mit seiner Frau in München und Umgebung verbringen möchte, interessieren ihn die Tagesausflugsangebote. Auf den Plakaten im Schaufenstern liest er betreffend die Tagesausflugsangebote die Nachricht "Pick-Select 9". Er hält sein Mobiltelefon mit integriertem RFID-Tag an den Pick-Up-Point am Rande des Schaufensters. Das Aufblinken des Signallämpchens am Pick-Up-Point zeigt an, dass sein RFID-Tag erkannt wurde. Er wählt im Pick-Menü seines Mobiltelefons "Pick-Select-Email", gibt die Ziffer 9 ein und bestätigt mit "OK". Kurz darauf bekommt er die Angebote per Email zugesandt.

Im Falle der Endgeräte sind dabei die nachfolgenden Lösungen vorteilhaft: So kann ein Mobiltelefon oder UMTS-Endgerät mit integriertem RFID-Tag und einer auf dem Endgerät installierten Pick-Up-Client-Software eingesetzt werden. Das RFID-Tag sowie das Pick-Up-Client-Software-Modul kann auch nachträglich aufgebracht oder nachträglich eingebaut werden. Eine verdrahtete Verbindung zwischen dem RFID-Tag und dem Mobiltelefon ist für die Funktionsweise des Systems nicht nötig. Mobiltelefon und Tag können auch getrennt sein, wobei das Endgerät mit Pick-Up-Client-Software-Modul ausgestattet ist und das RFID-Tag beispielsweise auf einem Plastikchip aufgebracht ist.

Der Pick-Up-Point weist vorteilhafterweise folgende Komponenten auf: Zu einen benötigt er ein Kommunikationsmodul, um mit der Außenwelt in Kontakt treten zu können. Das Kommunikationsmodul kann gebildet werden von einem GSM oder einem GPRS-Modul, wobei je nach Anwendung auch ein UMTS-Modul, ein ISDN-Modul oder ein Modem vorteilhaft sein kann. Der Pick-Up-Point wird von einem Steuerungsmodul organisiert, wobei das Steuerungsmodul einen Mikrocontroller, einen Speicher und ein ROM mit Pick-Up-Point-Gerätekennung aufweist. Als weitere Komponenten umfasst die Architektur des Pick-Up-Point einen RFID-Reader und eine Stromversorgung.

Die Pick-Up Daten werden von einem zentralen Pick-Up-Daten-Server verwaltet, wobei ein Pick-Up-Service-Provider einen oder mehrere solcher Server im Internet zur Content-Bereitstellung betreibt. Auf diesen Servern stellen die Provider, z. B. Anbieter, wie Reisebüros oder Verkehrsunternehmen, die "auflesbaren" Informationen bereit. Die Informationen, die dem Nutzer zur Verfügung gestellt werden sollen, werden einem oder einer Gruppe von Pick-Up-Points, die durch ihre Pick-Up-Point-Gerätekennungs-Nummer gekennzeichnet sind, zugeordnet. Bei einer "Pick-Select"-Funktion, wie sie oben beschrieben wurde, wird die Information in einer zusätzlichen Untergliederung den entsprechenden Select-Nummern zugeordnet.

In einer besonderen Ausführungsform kann das System folgendermaßen funktionieren: Der zukünftige Benutzer des Pick-Up-Dienstes lädt zunächst ein Pick-Up-Client-Software-Modul in sein mobiles Endgerät und führt Einstellungen und Einträge in der Optionsmaske des Software-Moduls durch. Dies umfasst die Schritte: Aktivierung des Pick-Up Service, Eingabe des Identitäts-Nummer seines RFID-Tags, wobei er diese Nummer beim Kauf des mobilen Endgeräts oder des RFID-Tags erhalten hat, und Eingabe von Zieladressen für die Pick-Service-Komponenten, die nicht die Mobiltelefon-Nummer des Endgeräts als Zieladresse haben, wie zum Beispiel die E-Mail Adressen für die Servicekomponenten "Pick-Email" oder "Pick-Select-Email". Dabei kann auch, z. B. zur Versendung von Grußkarten, die eigene oder unter Umständen eine fremde Adresse eingegeben werden.

Hält nun ein Nutzer sein mobiles Endgerät mit RFID-Tag an den Reader des Pick-Up-Points, so liest der Pick-Up-Point zunächst die Identitäts-Nummer des RFID-Tags und zeigt den erfolgreichen Lesevorgang an. Der Pick-Up-Point erzeugt dann eine Nachricht, beispielsweise eine SMS-Nachricht, mit der Identitäts-Nummer des RFID-Tags, der Gerätekennung des Pick-Up-Points und der aktuellen Zeit. Diese sendet er an den Pick-Up-System-Server.

Der Nutzer wählt eine Pick-Service-Komponente, beispielsweise "Pick-MMS", "Pick-Email" oder "Pick-Select-Email", im Pick-Menü seines Mobiltelefons. Bei Auswahl einer Pick-Select-Service-Komponente, wie Pick-Select-Email oder Pick-Select-MMS, gibt er anschließend die Select-Nummer ein. Danach bestätigt er seinen Wunsch mit "OK". Auch dabei wird automatisch eine Nachricht z.B. per SMS, an den Pick-Up-System-Server versandt, die folgende Elemente enthält: Herkunftsnachweis durch die Mobilfunk-Nummer, Identitäts-Nummer des RFID-Tags, die Zeit, die Select-Nummer bei Auswahl einer der genannten Pick-Select-Sevice-Komponenten und die Zieladresse bei Auswahl einer Pick-Service-Komponente, die nicht die Mobilfunk-Nr. des Endgerätes als Zieladresse hat, z. B. die Email-Adresse bei Pick-Email, Pick-Select-Email.

Der Pick-Up-System-Server ordnet nun die Nachrichten vom Pick-Up-Point und vom mobilem Endgerät durch die Identitäts-Nummer des RFID-Tags einander zu.

Sind beide Nachrichten-Typen mit gleicher Identitäts-Nummer vorhanden und stimmt die Zeit in einem definierten Zeitintervall überein, so wird mit Hilfe der Geräte-Kennung des Pick-Up-Points und gegebenenfalls der Select-Nummer die gewünschte Information auf den Pick-Up-Daten-Servern gefunden und an die Mobilfunk-Nummer bzw. an die mit der Pick-Service-Komponente festgelegte Zieladresse versandt. Eine eventuelle Bezahlung der erhaltenen Dienstleistung geschieht nach vorheriger Vereinbarung über den Telephonanbieter oder durch Versendung einer Rechnung an die Adresse des Kunden.

## Patentansprüche

1. Verfahren zum Abruf eines Service, insbesondere in Form der Bereitstellung einer Information und/oder einer Dienstleistung, wobei der Service einem Nutzerkreis an einem definierten Ort "Service Point" öffentlich angeboten wird und wobei der Service von einem interessierten Nutzer abgerufen wird, wobei der Nutzer sich mittels eines mitgeführten Transponders an den Service Point wendet, wobei der Transponder über den Austausch elektromagnetischer Signale von einem am Service Point befindlichen Decoder erkannt wird, wobei der Service Point die Durchführung des angebotenen Service nach dem Erkennen des Transponders initiiert,
wobei der Nutzer seinen auf die Inanspruchnahme des Service gerichteten Wunsch vor der Auslösung durch den Service Point mit einer Eingabe bestätigt, dadurch gezennzeichnet dass der Nutzer die Auslösung durch Verschicken einer vordefinierten Nachricht, an den Service Point bestätigt, die keine weiteren Eingaben benötigt und durch ein Befehls-Element im Bedienungsmenü abgesandt wird.

2. Verfahren nach Anspruch 1,
**dadurch gekennzeichnet, dass** der Nutzer sich mittels der auf dem Transponder befindlichen Information identifiziert und authentifiziert.

3. Verfahren nach Anspruch 1 oder 2,
**dadurch gekennzeichnet, dass** der Nutzer den Transponder in unmittelbare Nähe zu einem am Service Point befindlichen Decoder bringt, wobei die dadurch veranlasste Kommunikation zwischen Transponder und Decoder die Durchführung des vom Service Point angebotenen Service auslöst.

4. Verfahren nach einem der vorherigen Ansprüche,
**dadurch gekennzeichnet, dass** der Nutzer ein zur mobilen Kommunikation geeignetes Endgerät, insbesondere ein Mobiltelephon oder ein mobilfunkfähiges PDA, mitführt, mit dem er Daten an den Service Point überträgt und/oder auf dem er vom Service Point empfangene Daten ausgibt.

5. Verfahren nach einem der vorherigen Ansprüche,
**dadurch gekennzeichnet, dass** der Service Point an einem Ort aufgestellt ist, an dem der Nutzer aktuellen Bedarf hat an einer relevanten Information, an Material, beispielsweise einer Ware, an einer Dienstleistung, beispielsweise einem Service, oder an einer Legitimation, beispielsweise einer Eintrittsberechtigung.

6. Verfahren nach einem der vorherigen Ansprüche,
**dadurch gekennzeichnet, dass** der Nutzer nach seiner Identifikation die angebotene Information übermittelt bekommt, wobei die Information über ein Ausgabemittel des Endgerätes, insbesondere über ein Display oder über einen Lautsprecher, ausgegeben wird.

7. Verfahren nach einem der vorherigen Ansprüche,
**dadurch gekennzeichnet, dass** der Nutzer das angebotene Material zu einer vorgebbaren Adresse übermittelt bekommt, wobei die Adresse oder ein Hinweis auf die Adresse vom Endgerät an den Service Point übertragen wird.

8. Verfahren nach einem der vorherigen Ansprüche,
**dadurch gekennzeichnet, dass** technisch ein "Pick Up" Service realisiert wird, der eine Informationsbeschaffung im Vorübergehen des Nutzers am Service Point ermöglicht.

9. System, welches ein Verfahren nach einem der vorherigen Ansprüche durchführt, aufweisend einen Service Point mit einem Decoder und einen mobilen Transponder, der einem Nutzer zugeordnet ist, wobei der mit dem Decoder insbesondere über den Austausch elektromagnetischer Signale wechselwirkende Transponder den Abruf eines vom Service Point angebotenen Service auslöst.

10. System nach Anspruch 9,
**dadurch gekennzeichnet, dass** der TransponderTeil eines mobilen Endgerätes, insbesondere eines Mobiltelephons oder eines PDA, ist, wobei der Transponder insbesondere ein RFID-Tag ist.

11. System nach Anspruch 9 oder 10,
**dadurch gekennzeichnet, dass** das Endgerät ein Mobiltelefon oder ein UMTS-Endgerät ist, auf dem eine Pick-Up-Client-Software installiert ist

12. System nach einem der Ansprüche 9 bis 11,
**dadurch gekennzeichnet, dass** der Service Point einen Prozessor und ein Interface zum Anschluss an ein Datennetz aufweist, wobei das Interface den Zugang zu einem Host-Rechner ermöglicht.

13. System nach einem der Ansprüche 9 bis 12,
**dadurch gekennzeichnet, dass** der Service Point ein Kommunikationsmodul, insbesondere ein GSM- Modul, ein GPRS-Modul, ein UMTS-Modul, ein ISDN-Modul oder ein Modem, aufweist, über das er mit der Aussenwelt in Kontakt tritt.

14. System nach einem der Ansprüche 9 bis 13,
**dadurch gekennzeichnet, dass** der Service Point ein Steuerungsmodul zur Organisation aufweist, wobei das Steuerungsmodul einen Mikrocontroller, einen Speicher und ein ROM mit Pick-Up-Point-Gerätekennung aufweist.

## Claims

1. A method for calling up a service, in particular in the form of providing an information and/or a service, wherein the service is publicly offered to a group of users in a defined location or "service point" and wherein the service is called up by an interested user, wherein the user contacts the service point by means of a transponder that he carries along, wherein the transponder is recognized by a decoder present at the service point by exchanging electromagnetical signals, wherein the service point initiates the execution of the offered service after recognition of the transponder, wherein the user confirms its wish to use the service before the initiation of its execution through the service point by means of an input, **characterised in that** the user confirms the initiation by sending a predefined message to the service point which does not need any additional input and is sent through a command element in the user menu.

2. The method according to claim 1,
**characterised in that** the user identifies and authenticates himself by means of the information present on the transponder.

3. The method according to claim 1 or 2,
**characterised in that** the user brings the transponder into immediate vicinity of a decoder present at the service point, wherein the communication between the transponder and the decoder thereby initiated triggers the execution of the service offered by the service point.

4. The method according to any one of the preceding claims,
**characterised in that** the user carries along a terminal adapted for mobile communication, in particular a mobile telephone or PDA with mobile communication abilities, by means of which data is transmitted to the service point and/or data received from the service point are output.

5. The method according to any one of the preceding claims,
**characterised in that** the service point is installed in a location where the user has an immediate need for a relevant information, a material, for example a product, a service, or a legitimisation, for example an admission.

6. The method according to any one of the preceding claims,
**characterised in that** the user receives a transmission of the offered information after his identification, wherein the information is output via an outputting means of the terminal, in particular a display or a loudspeaker.

7. The method according to any one of the preceding claims,
**characterised in that** the user receives a transmission of the offered material to a predeterminable address, wherein the address or a reference to the address is transmitted from the terminal to the service point.

8. The method according to any one of the preceding claims,
**characterised in that** in technical terms a "Pick Up" service is implemented which allows the retrieval of information while the user passes by the service point.

9. A system performing a method according to any one of the preceding claims, the system having a service point with a decoder and a mobile transponder associated with a user, wherein the transponder interacting with the decoder in particular by exchanging electromagnetical signals triggers the call-up of a service offered by the service point.

10. The system according to claim 9,
**characterised in that** the transponder is part of a mobile terminal, in particular a mobile phone or a PDA, wherein the transponder in particular is a RFID tag.

11. The system according to claim 9 or 10,
**characterised in that** the terminal is a mobile phone or a UMTS terminal on which a Pick-Up client software is installed.

12. The system according to any one of claims 9 to 11,
**characterised in that** the service point has a processor and an interface for the connection to a data network, wherein the interface allows for access to a host computer.

13. The system according to any one of claims 9 to 12,
**characterised in that** the service point has a communication module, in particular a GSM module, a GPRS module, a UMTS module, an ISDN module or a modem, by means of which it contacts the outer world.

14. The system according to any one of claims 9 to 13,
**characterised in that** the service point has a control module for its organisation, wherein the control module has a microcontroller, a memory and a ROM with Pick-Up-Point device identification.

## Revendications

1. Procédé de demande d'un service, notamment sous la forme de fourniture d'une information et/ou d'une prestation de service, le service étant proposé publiquement à un cercle d'utilisateurs à un emplacement défini ou "point de service" et le service étant demandé par un utilisateur intéressé, l'utilisateur s'adressant au point de service moyennant un transpondeur qu'il porte sur lui, le transpondeur étant reconnu par un décodeur situé au niveau du point de service moyennent l'échange de signaux électromagnétiques, le point de service déclenchant l'exécution du service proposé après avoir reconnu le transpondeur, l'utilisateur confirmant son souhait d'utiliser le service par une entrée avant qu'il ne soit déclenché par le point de service, **caractérisé en ce que** l'utilisateur confirme le déclenchement en envoyant un message prédéfinie au point de service, qui ne nécessite pas d'autres entrées et qui est envoyé à l'aide d'un élément de commande du menu utilisateur.

2. Procédé selon la revendication 1,
**caractérisé en ce que** l'utilisateur s'identifie et s'authentifie moyennent l'information se trouvant sur le transpondeur.

3. Procédé selon l'une des revendications 1 ou 2,
**caractérisé en ce que** l'utilisateur amène le transpondeur à proximité immédiate d'un décodeur situé au point de service, la communication ainsi initiée entre le transpondeur et le décodeur déclenchant l'exécution du service proposé par le point de service.

4. Procédé selon l'une des revendications précédentes,
**caractérisé en ce que** l'utilisateur porte sur lui un terminal adapté à la communication mobile, notamment un téléphone mobile ou un PDA capable de se connecter à un réseau de téléphonie mobile, avec lequel il transmet des données au point de service et/ou restitue des données reçues du point de service.

5. Procédé selon l'une des revendications précédentes,
**caractérisé en ce que** le point de service est implanté dans un endroit où l'utilisateur a un besoin actuel d'obtenir une information pertinente, un matériel, tel qu'une marchandise, une prestation de service, telle qu'un service, ou une légitimation, telle qu'une autorisation d'entrée.

6. Procédé selon l'une des revendications précédentes,
**caractérisé en ce que**, après avoir été identifié, l'utilisateur reçoit l'information proposée par l'intermédiaire d'un moyen de sortie du terminal, notamment d'un écran d'affichage ou d'un haut-parleur.

7. Procédé selon l'une des revendications précédentes,
**caractérisé en ce que** le matériel proposé est transmis à l'utilisateur à une adresse pouvant être prédéterminée, l'adresse ou une indication relative à l'adresse étant transmise au point de service par le terminal.

8. Procédé selon l'une des revendications précédentes,
**caractérisé en ce que**, au niveau technique, un service de collecte (Pick Up Service) est réalisé qui permet la collecte d'informations au moment du passage de l'utilisateur au point de service.

9. Système réalisant un procédé selon l'une des revendications précédentes, comportant un point de service doté d'un décodeur, et un transpondeur mobile affecté à un utilisateur, le transpondeur qui interagit avec le décodeur, notamment en échangeant des signaux électromagnétiques, déclenchant la demande d'un service proposé par le point de service.

10. Système selon la revendication 9,
**caractérisé en ce que** le transpondeur fait partie d'un terminal mobile, notamment d'un téléphone mobile ou d'un PDA, le transpondeur étant notamment un tag RFID.

11. Système selon l'une des revendications 9 ou 10,
**caractérisé en ce que** le terminal est un téléphone mobile ou un terminal UMTS dans lequel est installé un logiciel client de collecte (Pick-Up-Client).

12. Système selon l'une des revendications 9 à 11,
**caractérisé en ce que** le point de service comprend un processeur et une interface pour la connexion à un réseau de données, l'interface permettant l'accès à un ordinateur hôte.

13. Système selon l'une des revendications 9 à 12,
**caractérisé en ce que** le point de service comprend un module de communication, notamment un module GSM, un module GPRS, un module UMTS, un module RNIS ou un modem par l'intermédiaire duquel il entre en contact avec le monde extérieur.

14. Système selon l'une des revendications 9 à 13,
**caractérisé en ce que** le point de service présente un module de commande pour l'organisation, le module de commande comprenant un microcontrôleur, une mémoire et une ROM avec identifiant d'équipement de point de collecte (Pick-Up-Point).
